(19) Europäisches Patentamt
European Patent Office
Office européen des brevets

(11) EP 0 754 331 B1

(12) EUROPEAN PATENT SPECIFICATION

(45) Date of publication and mention
of the grant of the patent:
**13.01.1999 Bulletin 1999/02**

(51) Int Cl.⁶: **G06K 19/073**, G07F 7/08

(21) Application number: **95914454.4**

(22) Date of filing: **06.04.1995**

(86) International application number:
**PCT/GB95/00795**

(87) International publication number:
**WO 95/27955 (19.10.1995 Gazette 1995/45)**

(54) **SMART CARD**

CHIPKARTE

CARTE A PUCE

(84) Designated Contracting States:
**CH DE ES FR IT LI**

(30) Priority: **07.04.1994 GB 9406829**

(43) Date of publication of application:
**22.01.1997 Bulletin 1997/04**

(73) Proprietor: **MARCONI COMMUNICATIONS LIMITED**
**Coventry, CV3 1HJ (GB)**

(72) Inventors:
• **HUMMERSTON, William**
**Liverpool L36 5TW (GB)**
• **TIERNEY, John**
**Liverpool L15 5BE (GB)**

(74) Representative: **Walker, Andrew John**
**The General Electric Company plc**
**Patent Department**
**Waterhouse Lane**
**Chelmsford, Essex CM1 2QX (GB)**

(56) References cited:
EP-A- 0 227 532      EP-A- 0 378 454
EP-A- 0 423 035      FR-A- 2 685 520

## Description

This invention relates to smart cards designed to be used as pre-payment memory devices. A smart card basically comprises an integrated circuit which is embedded in the card. The circuit constitutes memory within which information is stored and is read when the card is in use. In the case of a card used for payment purposes, the information stored representing counter value is deducted from the memory as time progresses. One suitable available integrated circuit is known as "Eurochip" sold by Siemens. Such an arrangement can be useful when the card is used for paying the cost of a telephone conversation on a pay-phone or for some other pre-payment device, such as on a pay video channel or electricity meter. The information is stored in a plurality of bits constituting a counter which is decremented as time progresses. It is one object of the invention to provide a card which can be used more than once since this cuts down the considerably on the cost of the card in relation to its value.

A known smart card is disclosed in FR-A-2 685 520. It comprises a counter including a first part which is decremented during a payment transaction and a second part having a set of bits which are switched one by one each time the first part is recharged by a recharging terminal. The card also comprises a memory within which a certificate is written by the recharging terminal. The certificate is calculated as a function of data present on the card. During a payment transaction of the card the certificate is read to certify that the card has been charged by an authentic recharging terminal.

According to the present invention in one aspect, there is provided a smart card as defined in Claim 1.

Preferably the certificate is generated by combining data from the recharging terminal with data indicative of the card.

In this way, for example, a smart card of a certain pre-payment capacity can be used as a card of a lower capacity, but which is re-chargeable a limited number of times according to the number of control bits provided.

Furthermore, a way is provided of ensuring that the card has been recharged only by an authentic recharging terminal, as opposed to some fraudulent means.

Preferably the data from the recharging terminal is combined by means of an algorithm with data indicative of the card to generate the certificate.

In a preferred embodiment, the card indicative data includes data indicative of the number of times that the card has been recharged and the certificate generated is different according to that number.

In a preferred embodiment, the first stage of the counter is arranged in one or more ranks of bits, each rank corresponding to one power of the base of which the counter operates, a payment transaction being arranged to decrement the lowest order rank with the decrementing of a value greater than that in the lowest order rank being operative to decrement from a higher order rank and to recharge the lowest order rank, the control bits being located in the highest order rank.

In another aspect there is provided a system for recharging with credits a smart card designed to be used as a pre-payment as defined in Claim 6.

Preferably the certificate is generated by combining data from the recharging terminal with data indicative of the card.

In a further aspect there is provided a method of recharging with credits a smart card designed to be used as a pre-payment device as defined in Claim 9.

Preferably the certificate is generated by combining data from the recharging terminal with data indicative of the card.

In order that the invention may be well understood, an embodiment thereof will now be described by way of example with reference to the accompanying diagrammatic drawings in which;

Figures 1A, 1B and 1C show the constituent parts of the system required for the invention;

Figure 2 shows the contents of the memory of the card shown in Figure 1A; and

Figure 3 shows arrangement of the counter which forms part of Figure 2.

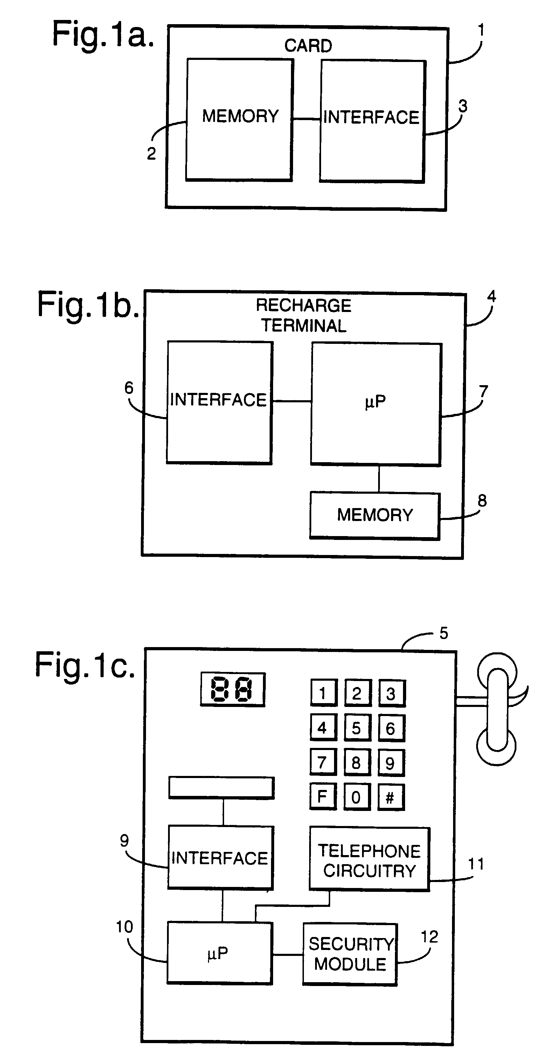

Referring to Figures 1A to 1C, a smart card 1 includes a memory 2, in particular as will be described with reference to the "Eurochip" manufactured and sold by Siemens, and an interface 3 by which the card can communicate with a recharge terminal 4, shown in Figure 1B. In addition the system comprises a device, such as the telephone 5 shown in Figure 1C, with which the card shown in Figure 1A can be used for payment purposes.

As will be described in greater detail later on, the card 1 is designed to be sold with an initial predetermined number of credits which are decremented in use by the telephone 5. Once the predetermined number of credits have been used up the card can be introduced into the recharge terminal 4 which comprises an interface 6 for communicating with the card 1, a microprocessor 7 and memory 8. The method of operation will be described in greater detail later on, but essentially the recharge terminal functions, upon payment by the user of the card to the terminal operator, to recharge the card 1 with credits, this can be repeated for a limited number of times. The telephone 5 includes an interface 9 for communicating with the card, a microprocessor 10 connected to telephone circuitry 11 and a security module 12 which provides a means of verifying the authentication of an inserted card.

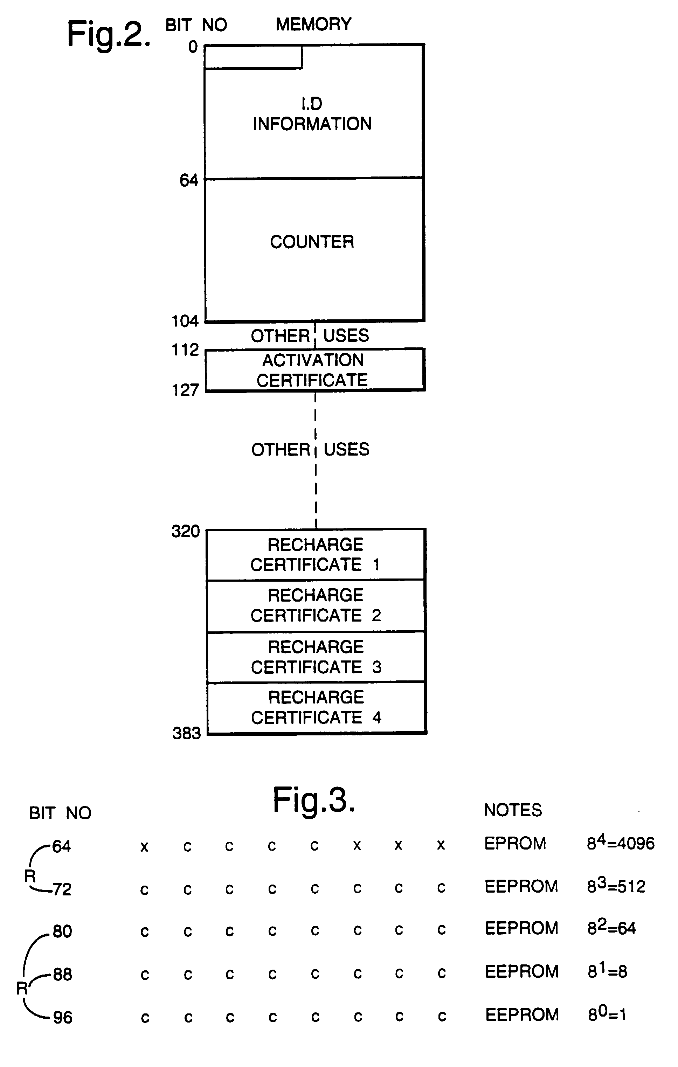

A map showing the functions assigned to the various bits within the memory 2 on the card 1 is shown in Figure 2. In Figure 2, bits 0 to 63 comprise a read-only memory (in user mode) within which card identity, or ID, information is stored. Bits 64 to 104 comprise a counter which is decremented during payment . Figure 3 shows a base eight counter in which bits 72 to 103 are arranged in four rows or ranks R, where each rank corresponds to a power of the base which the counter operates. As shown, bits 96 to 103 represent the lowest value in the counter ie. each bit represents a value of 1 or $8^0$. Bits 88 to 95 each represent a value of 8, ie. 8 '. Bits 64 and 69 - 71 are not available for the counter. Bits 65 to 68 are valid counter bits that can be written to once. The card is initially charged by writing a value to these bits and bits 72 to 103 giving a maximum charge of 20,480 units.

According to the invention some of the highest value bits, e.g. bits 65 to 68 are used as revaluation flag and only bits 72 to 103 are used as the counter itself (giving a reduced maximum charge of 4,096 units). The counter operates by decrementing from the lowest order rank. Once those bits have been written to a value of zero, the next unit to be decremented causes the unit in the next highest available order rank to be written to a value of zero which thereby refigures all the succeeding bits. Bits 65 to 68 are designed to be switched in order to cause the counter to be recharged.

In order to prevent the revaluation bits 65 to 68 being recharged fraudulently a certificate is written into the memory of the card each time a revaluation is performed. Referring back to Figure 2, bits 320 to 383 provide the location for four 16 bit recharge certificates, stored in the cards memory.

Each recharge certificate is calculated as follows: a recharge algorithm R say, will take as an input a key k and some data d. It will produce as an output a certificate, C. More formally

$$C = R\ (k,d).$$

The input data, d, consists of a combination of the top counter stage (bits 65 - 68) and card identification data obtained from within bits 0 to 63. The key data k is stored within the memory 8 of the recharge terminal 4. In this way the data uniquely represents the card and its current recharge iteration. The algorithm is such that it is not feasible for an attacker to deduce the key data, k, from a knowledge of R, C and D, except by means of a "brute force" evaluation of all possible keys. The design such that only recharge terminals with valid keys will be able to consistently produce correct recharged certificates. No recharge certificate is required for the initial use.

Whenever the card is inserted into a telephone 5 the security module 12 determines which certificate is currently active (e.g. if bits 65 - 68 have a value of 001 1 then this implies that a second recharge has been performed). If the certificate stored on the card does not match that calculated by the security module 12, the card is rejected as having an invalid recharge certificate and cannot then be used for payment purposes. Each time the card is recharged, the appropriate bit is written to 0. For example, the first recharge will set bit 65 to 0.

Referring back to Figure 2 the memory additionally includes an activation certificate area, bits 112 to 127. The Activation Certificate is generated in a similar way to the recharge certificates described previously. The activation certificate is designed to be written onto the card at the point of sale in order to verify that the card has been sold from an authorised supplier and, for example, has not been stolen. As an alternative the activation certificate could be written into one of the spaces occupied by one of the recharge certificates. This would reduce the number of available re-uses, but would allow bits 112 to 127 to be used for other purposes. In other alternative embodiments different numbers of recharges are possible if a smaller certificate is used. Similarly, if more than four counter bits are used as the top stage of the counter, more recharges would be available. For example if an 8 bit certificate were used, bits 72-75 could also be used to control the number of recharges, but this would mean bits 76 - 79 could not be used for counter value, thus reducing the maximum recharge allowed each time, but allowing 8 recharges, and hence a total of 9 uses.

**Claims**

1. A smart card to be used as a pre-payment device comprising a multi-stage counter including a first stage which is decremented during payment, a second stage which operates as a set of one or more control bits designed to be switched by a recharging terminal on recharging of the first stage, a certificate memory within which a certificate is written at different locations each time recharging is performed by the recharging terminal, the certificate being readable during a payment transaction to certify that the card has been recharged by an authentic recharging terminal, characterised in that the certificate memory is arranged so as to store a plurality of certificates simultaneously and in that certificates cannot be rewritten.

2. A smart card according to claim 1 characterised in that the certificate is generated by combining data from the recharging terminal with data indicative of the card.

3. A smart card according to claim 1 or claim 2 characterised in that the data from the recharging terminal is combined with the data indicative of the card by means of an algorithm.

4. A smart card according to any preceding claim characterised in that the card indicative data includes data indicative of the number of times that the card has been recharged and in which the certificate generated is different according to that number.

5. A smart card according to any preceding claim characterised in that the first stage of the counter is arranged in one or more ranks of bits, each rank corresponding to one power of the base at which the counter operates, a payment transaction being arranged to decrement the lowest order rank, with the decrementing of a value greater than that in the lowest order rank being operative to decrement from a higher order rank and to recharge the lowest order rank, the control bits being located in the highest order rank.

6. A system for recharging with credits a smart card designed to be used as a pre-payment device comprising a smart card according to any of the preceding claims and a recharging terminal, being operative to switch the control bits on the card and to write a certificate into the certificate memory of the card.

7. A system according to claim 6 characterised in that the certificate is generated by combining data from the recharging terminal with data indicative of the card.

8. A system according to claim 6 or claim 7 characterised in that the data from the recharging terminal is combined with the data indicative of the card by means of an algorithm.

9. A method of recharging with credits a smart card designed to be used as a pre-payment device, the smart card including a multi-stage counter including a first stage which is decremented during payment, and a second stage which operates as a set of one or more control bits designed to control recharging of the first stage, the method comprising introducing the smart card to a recharging terminal which is operative to switch the control bits on recharging of the first stage of the counter, and writing a certificate into a certificate memory of the card each time recharging is performed, the certificate being readable during a payment transaction to certify that the card has been recharged by an authentic recharging terminal characterised in that certificates of different recharge operations are stored in different memory locations, and in that certificates cannot be rewritten.

10. A method according to claim 9 characterised in that the certificate is generated by combining data from the recharging terminal with data indicative of the card.

**Patentansprüche**

1. Chipkarte zur Benutzung als Vorauszahlungsmittel enthaltend einen mehrstufigen Zähler mit einer ersten Stufe, die während einer Zahlung zurückgezählt wird, einer zweiten Stufe, die als ein Satz von einem oder mehreren Kontrollbits arbeitet, die dafür ausgelegt sind, bei Nachladen der ersten Stufe von einer Ladestation geändert zu werden, einen Zertifikatspeicher, in dem bei jedem Nachladen von der Ladestation ein Zertifikat an verschiedene Stellen geschrieben wird, wobei das Zertifikat während einer Zahlung lesbar ist, um zu bestätigen, daß die Karte an einer authentischen Ladestation nachgeladen worden ist,
dadurch gekennzeichnet,
daß der Zertifikatspeicher so angelegt ist, daß mehrere Zertifikate gleichzeitig gespeichert werden können, und daß die Zertifikate nicht überschrieben werden können.

2. Chipkarte nach Anspruch 1, dadurch gekennzeichnet,
daß das Zertifikat durch Kombination von Daten von der Ladestation mit die Karte kennzeichnenden Daten gebildet wird.

3. Chipkarte nach Anspruch 1 oder 2, dadurch gekennzeichnet,
daß die Daten von der Ladestation mit den die Karte kennzeichnenden Daten mittels eines Algorithmus kombiniert werden.

4. Chipkarte nach einem der vorhergehenden Ansprüche, dadurch gekennzeichnet,
daß die die Karte kennzeichnenden Daten Daten enthalten, die anzeigen, wieviele Male die Karte nachgeladen worden ist und daß das gebildete Zertifikat entsprechend der Anzahl (der Nachladungen) verschieden ist.

5. Chipkarte nach einem der vorhergehenden Ansprüche, dadurch gekennzeichnet,
daß die erste Stufe des Zählers in einer oder mehreren Ebenen von Bits angeordnet ist, wobei jede Ebene einer Potenz der Basis, mit der der Zähler arbeitet, entspricht, daß eine Zahlungstransaktion so angelegt ist, daß sie die niedrigste Ebene zurückzählt, wobei das Zurückzählen eines Wertes größer als der in der niedrigsten Ebene so wirkt, daß von einer höheren Ebene zurückgezählt wird und die unterste Ebene nachgeladen wird, und daß die Kontrollbits auf der höchsten Ebene angeordnet sind.

6. System zum Nachladen von Chipkarten zur Benutzung als Vorauszahlungsmittel mit Guthabeneinheiten enthaltend eine Chipkarte nach einem der vorhergehenden Ansprüche und eine Ladestation, deren Funktion ist, die Kontrollbits auf der Karte umzusetzen und ein Zertifikat in den Zertifikatspeicher zu schreiben.

7. System nach Anspruch 6, dadurch gekennzeichnet, daß das Zertifikat durch Kombination von Daten von der Ladestation mit die Karte kennzeichnenden Daten gebildet wird.

8. System nach Anspruch 6 oder 7, dadurch gekennzeichnet, daß die Daten von der Ladestation mit den die Karte kennzeichnenden Daten mittels eines Algorithmus kombiniert werden.

9. Verfahren zum Nachladen von Chipkarten zur Benutzung als Vorauszahlungsmittel mit Guthabeneinheiten, wobei die Chipkarte einen mehrstufigen Zähler mit einer ersten Stufe, die während einer Zahlung zurückgezählt wird, und einer zweiten Stufe, die als ein Satz von einem oder mehreren Kontrollbits arbeitet und dafür ausgelegt ist, das Nachladen der ersten Stufe zu kontrollieren, enthaltend die Schritte:

Einführen der Chipkarte in eine Ladestation, die die Funktion hat, die Kontrollbits bei Nachladen der ersten Stufe des Zählers umzusetzen, und Schreiben eines Zertifikates in den Zertifikatspeicher der Karte bei jedem Nachladen der Karte, wobei das Zertifikat während einer Zahlungstransaktion lesbar ist, um zu bestätigen, daß die Karte an einer authentischen Ladestation nachgeladen worden ist, dadurch gekennzeichnet,
daß Zertifikate verschiedener Nachladevorgänge an verschiedenen Speicherstellen gespeichert werden, wobei die Anzahl der Nachladeoperationen durch die entsprechende Anzahl gleichzeitig speicherbarer Zertifikate begrenzt ist und daß die Zertifikate nicht überschrieben werden können.

10. Verfahren nach Anspruch 9, dadurch gekennzeichnet, daß das Zertifikat durch Kombination von Daten von der Ladestation mit die Karte kennzeichnenden Daten gebildet wird.

**Revendications**

1. Carte à puce destinée à être utilisée comme dispositif de prépaiement, comprenant un compteur à plusieurs étages comportant un premier étage qui régresse en cours de paiement, un second étage qui joue le rôle d'un ensemble d'un ou plusieurs bits de commande destinés à être commuté par un terminal de recharge du premier étage, et une mémoire de certificat dans laquelle un certificat est écrit à différents emplacements chaque fois qu'une recharge est exécutée par le terminal de recharge, le certificat étant lisible lors d'une transaction de paiement pour certifier que la carte a été rechargée par un terminal de recharge authentique, caractérisée en ce que la mémoire de certificat est destinée à conserver plusieurs certificats simultanément, et en ce que les certificats ne permettent pas une réécriture.

2. Carte à puce selon la revendication 1, caractérisée en ce que le certificat est créé par combinaison de données provenant du terminal de recharge avec des données représentatives de la carte.

3. Carte à puce selon la revendication 1 ou 2, caractérisée en ce que les données provenant du terminal de recharge sont combinées aux données représentatives de la carte par un algorithme.

4. Carte à puce selon l'une quelconque des revendications précédentes, caractérisée en ce que les données représentatives de la carte comprennent des données représentatives du nombre de recharges de la carte, et dans laquelle le certificat créé est différent en fonction de ce nombre.

5. Carte à puce selon l'une quelconque des revendications précédentes, caractérisée en ce que le premier étage du compteur est placé dans un ou plusieurs rangs de bits, chaque rang correspondant à une puissance de la base avec laquelle fonctionne le compteur, une transaction de paiement étant destinée à faire régresser le rang d'ordre inférieur, la régression d'une valeur supérieure à celle d'un rang de l'ordre inférieur provoquant une réduction d'un rang d'ordre supérieur et la recharge du rang d'ordre inférieur, les bits de commande se trouvant dans le rang d'ordre le plus élevé.

6. Système de recharge d'une carte à puce par des crédits, la carte étant destinée à être utilisée comme dispositif de prépaiement comprenant une carte à puce selon l'une quelconque des revendications précédentes et un terminal de recharge destiné à commuter les bits de commande de la carte et à écrire un certificat dans la mémoire de certificat de la carte.

7. Système selon la revendication 6, caractérisé en ce que le certificat est créé par combinaison de données provenant du terminal de recharge avec des données représentatives de la carte.

8. Système selon la revendication 6 ou 7, caractérisé en ce que les données provenant du terminal de recharge sont combinées aux données représentatives de la carte par un algorithme.

9. Procédé de recharge d'une carte à puce avec des crédits, la carte étant destinée à être utilisée comme dispositif de prépaiement et comprenant un compteur à plusieurs étages comportant un premier étage qui régresse lors d'un paiement, et un second étage qui joue le rôle d'un ensemble d'un ou plusieurs bits de commande et destiné à commander la recharge du premier étage, le procédé comprenant l'introduction de la carte à puce dans un terminal de recharge qui peut commuter les bits de commande lors de la recharge du premier étage du compteur et écrire un certificat dans une mémoire de certificat de la carte chaque fois qu'une recharge est exécutée, le certificat pouvant être lu pendant une transaction de paiement pour la certification du fait que la carte a été rechargée par un terminal authentique de recharge, caractérisé en ce que des certificats d'opérations différentes de recharge sont mémorisés à des emplacements différents de mémoire et en ce que les certificats ne permettent pas une réécriture.

10. Procédé selon la revendication 9, caractérisé en ce que le certificat est créé par combinaison de données provenant du terminal de recharge avec des données représentatives de la carte.

Fig.1a.

CARD

MEMORY ── INTERFACE

Fig.1b.

RECHARGE TERMINAL

INTERFACE ── µP

MEMORY

Fig.1c.

88

| 1 | 2 | 3 |
| 4 | 5 | 6 |
| 7 | 8 | 9 |
| F | 0 | # |

INTERFACE

TELEPHONE CIRCUITRY

µP ── SECURITY MODULE

# Fig.2.

BIT NO    MEMORY

0

I.D
INFORMATION

64

COUNTER

104

OTHER USES

112

ACTIVATION
CERTIFICATE

127

OTHER USES

320

RECHARGE
CERTIFICATE 1

RECHARGE
CERTIFICATE 2

RECHARGE
CERTIFICATE 3

RECHARGE
CERTIFICATE 4

383

# Fig.3.

| BIT NO | | | | | | | | | NOTES | |
|---|---|---|---|---|---|---|---|---|---|---|
| 64 | x | c | c | c | c | x | x | x | EPROM | $8^4=4096$ |
| 72 | c | c | c | c | c | c | c | c | EEPROM | $8^3=512$ |
| 80 | c | c | c | c | c | c | c | c | EEPROM | $8^2=64$ |
| 88 | c | c | c | c | c | c | c | c | EEPROM | $8^1=8$ |
| 96 | c | c | c | c | c | c | c | c | EEPROM | $8^0=1$ |

R

R